# EUROPEAN PATENT SPECIFICATION

(11) **EP 3 226 378 B1**
(45) Date of publication and mention of the grant of the patent: **19.05.2021**
(21) Application number: 17164330.7
(22) Date of filing: 31.03.2017
(51) Int. Cl.: H02M 3/335, B60L 58/20, B60L 1/00, B60L 1/02, H02J 7/00, H02J 1/10, H02M 1/00

(54) **APPARATUS AND METHOD FOR SUPPLYING DIFFERENTIAL VOLTAGE, AND DC-DC CONVERTER**
VORRICHTUNG UND VERFAHREN ZUM ZUFÜHREN VON DIFFERENZSPANNUNG UND GLEICHSPANNUNGSWANDLER
APPAREIL ET PROCÉDÉ DE FOURNITURE DE TENSION DIFFÉRENTIELLE ET CONVERTISSEUR CC-CC

(30) Priority: 31.03.2016 CN 201610194621
(43) Date of publication of application: 04.10.2017
(73) Proprietor: Valeo Interior Controls Co., Ltd., Shenzhen, Guangdong 518103 (CN)
(72) Inventor: GUO, Zhiling, Shenzhen, Guangdong 518103 (CN); LIU, Bo, Shenzhen, Guangdong 518103 (CN)
(74) Representative: Cardon, Nicolas

(56) References cited:
- EP-A1- 1 591 299
- JP-A- 2005 135 672
- US-A1- 2005 127 871
- US-A1- 2007 070 654
- US-A1- 2012 280 571
- US-A1- 2014 368 160
- US-B1- 6 208 117
- US-B2- 6 937 490
- Texas Instruments: "LM5170-Q1 Multiphase Bidirectional Current Controller", , 1 November 2016 (2016-11-01), pages 1-67, XP055397973, Retrieved from the Internet: URL:http://pdf1.alldatasheet.com/datasheet -pdf/view/871982/TI1/LM5170-Q1.html [retrieved on 2017-08-10]
- SUNG HOONSUNG: "Development of high efficiency bi-directional DC/DC Converter for 48V-12V Dual voltage system in vehicle", EVS28 INTERNATIONAL ELECTRIC VEHICLE SYMPOSIUM AND EXHIBITION, 3 May 2015 (2015-05-03), pages 1-5, XP055535657, Goyang, Korea
- O. GARCIA ET AL: "Automotive DC-DC bidirectional converter made with many interleaved buck stages", IEEE TRANSACTIONS ON POWER ELECTRONICS, vol. 21, no. 3, 1 May 2006 (2006-05-01), pages 578-586, XP055071613, ISSN: 0885-8993, DOI: 10.1109/TPEL.2006.872379

## Description

### Technical field

The embodiments of this disclosure relate to an apparatus and a method for supplying a differential voltage, a direct current (DC)-DC converter, and a hybrid vehicle comprising the DC-DC converter.

### Background art

In a hybrid vehicle, in order to use high-power loads such as electric compressors, electric heaters, power steering and electric pumps, an additional 48 V battery system level is defined. A DC-DC converter must be arranged between the 48 V battery system and 14 V battery system.

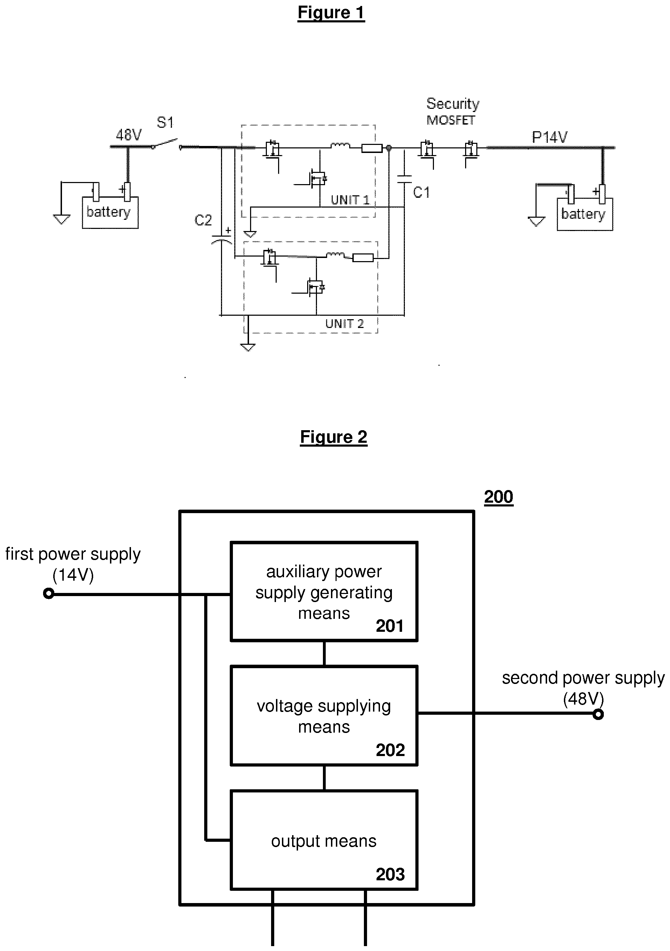

Fig. 1 shows a schematic diagram of a DC-DC converter connected between the 48 V battery system and the 14 V battery system, wherein unit 1 and unit 2 are two main circuits of the DC-DC converter. In the circuit connection, if switch S1 is closed when there is no voltage on capacitor C2, an arc discharge effect will occur. To reduce this arc discharge effect as much as possible, a pre-charging function is generally needed, i.e. capacitor C2 is first pre-charged from 0V to 48 V, then switch S1 is closed to begin transferring power.

In general, a control circuit is needed to control and/or realize the pre-charging function, and the control circuit needs a differential voltage to operate normally. Thus, a mechanism capable of providing a differential voltage for normal operation of the control circuit is needed.

### Non-patent literature

SUNG HOONSUNG: "Development of high efficiency bi-directional DC/DC Converter for 48V-12V Dual voltage system in vehicle",EVS28 INTERNATIONAL ELECTRIC VEHICLE SYMPOSIUM AND EXHIBITION, 3 May 2015 (2015-05-03), pages 1-5, Goyang, Korea

### Content of the invention

According to an embodiment of this disclosure, a system comprising: a control circuit (control circuit, LM5170); a DC-DC converter configured to convert a voltage between a first power supply (14V) and a second power supply (48V), comprising: a first port configured to be connected to the first power supply (14V); a second port configured to be connected to the second power supply (48V); converting means (Unit 1, Unit 2) connected between the first and second ports; a first capacitor (C1) connected between the first port and ground, said ground being configured to be connected to a negative pin of the first power supply (14V) and a negative pin of the second power supply (48V); a second capacitor (C2) connected between the second port and ground; and a security device (Security MOSFET) connected to the control circuit (control circuit, LM5170) and the first port and configured to be connected to the first power supply (14V), wherein the system further comprises: an apparatus (200) connected to the security device (Security MOSFET) and the control circuit (control circuit, LM5170) and configured to supply a differential voltage, said apparatus comprising: an auxiliary power supply generating means (201), which is configured to be connected to the first power supply (14V), and configured to generate an auxiliary power supply (12V/P14V); a voltage supplying means (202) configured to receive the second power supply (48V) and the auxiliary power supply (12V/P14V), and output one of the auxiliary power supply (12V/ P14V) and the second power supply (48V); and an output means (203) configured to supply the output from the voltage supplying means (202) and the first power supply (14V) as the differential voltage to the control circuit (control circuit, LM5170) to control the DC-DC converter, in order to ensure a circuit-breaker function (circuit breaker, BRKS, BRKG) of the security device (Security MOSFET), and to provide for a pre-charge of the first capacitor (C1), and the second capacitor (C2) and to operate the converting means.

In one example, the auxiliary power supply generating means comprises a half-wave rectification circuit, and a reference ground of the auxiliary power supply is a positive terminal of the first power supply.

In one example, the half-wave rectification circuit comprises: a floating winding, a first terminal of the floating winding being connected with the first power supply and a second terminal of the floating winding being connected with an anode of a first diode; the first diode, a cathode of the first diode being connected with the voltage supplying means; and a capacitor connected between the first terminal of the floating winding and the cathode of the first diode.

In one example, the auxiliary power supply generating means is a secondary side of a flyback converter, and a primary side of the flyback converter is connected to the first power supply.

In one example, the voltage supplying means comprises: a second diode, an anode of the second diode being connected with a port dedicated to the second power supply, and a cathode of the second diode being connected with the output means; and a third diode, an anode of the third diode being connected with the auxiliary power supply generating means, and a cathode of the third diode being connected with the output means.

In one example, the cathodes of the second diode and the third diode are connected with each other, and a switch is connected between the port dedicated to the second power supply and the second power supply.

In one example, the voltage supplying means outputs the auxiliary power supply through the third diode when the switch is turned off, and outputs the second power supply through the second diode when the switch is turned on.

In one example, the apparatus is configured to supply the differential voltage to a control circuit using the output differential voltage so as to control a DC-DC converter.

In one example, a voltage difference between the power supply output from the voltage supplying means and the first power supply is greater than or equal to 10V.

According to another embodiment of this disclosure, a hybrid vehicle comprising the DC-DC converter described above is provided.

According to another embodiment of this disclosure, a method for operating a system comprising: supplying a differential voltage by an apparatus (200) which is interconnected with a security device (Security MOSFET) of a DC-DC converter and a control circuit (control circuit, LM5170), comprised by the DC-DC power conversion system, wherein supplying the differential voltage comprises: connecting a first power supply (14V) to an auxiliary power supply generating means (201) and generate (S510) an auxiliary power supply; and receiving the auxiliary power supply (12V/P14V) and a second power supply (48V), and output one of the auxiliary power supply (12V/P14V) and the second power supply (48V) by a voltage supplying means (202); and supplying (S520) by an output means (203) the output from the voltage supplying means (202) and the first power supply (14V) as the differential voltage to the control circuit (control circuit, LM5170) and control the DC-DC converter, in order to ensure a circuit-breaker function (circuit breaker, BRKS, BRKG) of the security device (Security MOSFET), and to provide for a precharge of a first capacitor (C1), when connected to the first power supply (14V), and a second capacitor (C2), when connected to the second power supply (48V), comprised by the DC-DC converter, and to operate the converting means.

In one example, the step of supplying the first power supply and one of the auxiliary power supply and a second power supply externally comprises: supplying the first power supply and the auxiliary power supply externally before the second power supply is turned on; and supplying the first power supply and the second power supply externally after the second power supply is turned on.

In one example, the step of supplying the first power supply and one of the auxiliary power supply and a second power supply externally comprises supplying a differential voltage to a control circuit using the output differential voltage so as to control a DC-DC converter.

In one example, a voltage difference between the first power supply and one of the auxiliary power supply and a second power supply is greater than or equal to 10 V.

Thus, according to an embodiment of this disclosure, there is a voltage difference between the first power supply and the power supply supplied by the output means, so a differential voltage can be supplied, and so another circuit can use this differential voltage to operate normally.

### Description of the accompanying drawings

The following detailed description, which is aided by the accompanying drawings, will enable this disclosure to be understood more easily, wherein identical labels designate units with the same structure, and wherein:
Fig. 1 shows a schematic diagram of a DC-DC converter connected between the 48 V battery system and the 14 V battery system;
Fig. 2 shows a schematic block diagram of an apparatus for supplying a differential voltage according to an embodiment of this disclosure;
Fig. 3 shows a schematic diagram of the connections between an apparatus according to an embodiment of this disclosure and a control circuit for controlling and/or realizing a pre-charging function;
Fig. 4 shows a schematic diagram of a specific circuit of an apparatus for supplying a differential voltage according to an embodiment of this disclosure and a control circuit; and
Fig. 5 shows a schematic flow chart of a method for supplying a differential voltage according to an embodiment of this disclosure.

### Particular embodiments

The technical solutions in embodiments of the present invention are described clearly and fully below in conjunction with the accompanying drawings in embodiments of the present invention. Clearly, the embodiments described are some, not all, of the embodiments of the present invention. The scope of protection of this invention is only limited by the appended claims.

Fig. 2 shows a schematic block diagram of an apparatus 200 for supplying a differential voltage according to an embodiment of this disclosure.

As shown in Fig. 2, the apparatus 200 comprises an auxiliary power supply generating means 201, a voltage supplying means 202 and an output means 203.

The auxiliary power supply generating means 201 is connected with a first power supply, and configured to generate an auxiliary power supply. The voltage supplying means 202 is configured to receive a second power supply and the auxiliary power supply, and output one of the auxiliary power supply and the second power supply. The output means 203 is configured to supply the power supply output from the voltage supplying means and the first power supply externally.

In one example, the first power supply is e.g. 14 V, and the second power supply is e.g. 48 V.

Thus, according to an embodiment of this disclosure, there is a voltage difference between the first power supply and the power supply supplied by the output means 203, so the apparatus 200 can supply a differential voltage, and so another circuit can use this differential voltage to operate normally.

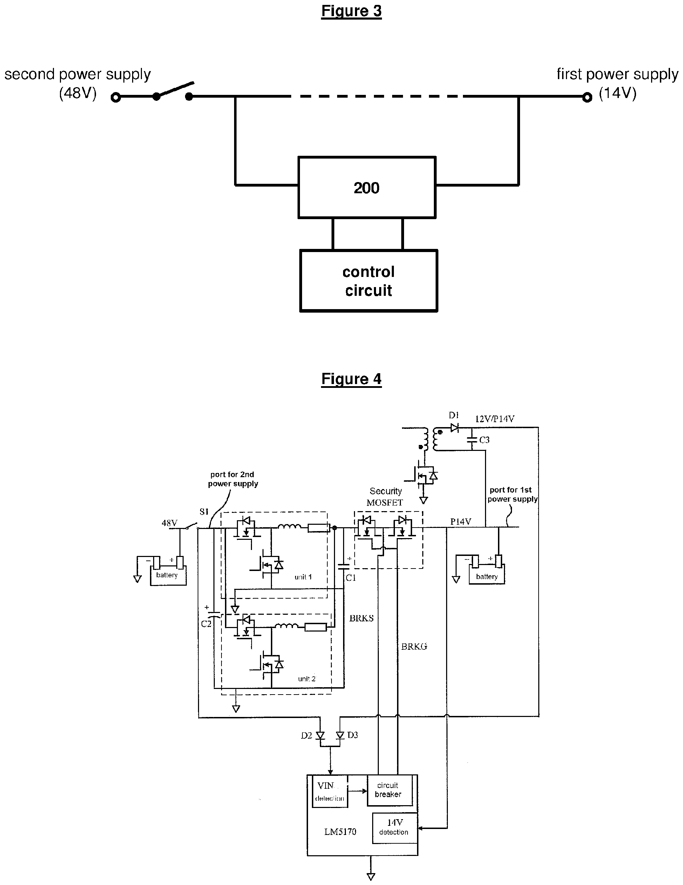

Fig. 3 shows a schematic diagram of the connections between an apparatus 200 according to an embodiment of this disclosure and a control circuit for controlling and/or realizing a pre-charging function.

As shown in Fig. 3, the apparatus 200 is connected between the first power supply (14 V) and the second power supply (48 V), and supplies two voltage outputs to the control circuit. The control circuit controls the main circuits in the DC-DC converter, such as unit 1 and unit 2, to be in a step-up mode. The two voltages output by the apparatus 200 are a differential voltage, so that the control circuit can operate normally and use the differential voltage to control the DC-DC converter.

Fig. 4 shows a schematic diagram of a specific circuit of an apparatus for supplying a differential voltage according to an embodiment of this disclosure and a control circuit.

In Fig. 4, the control circuit is shown as e.g. LM5170 from Texas Instruments, but the control circuit could obviously be specificized as any other suitable circuit. In Fig. 4, only unit 1 and unit 2 are shown, but those skilled in the art should understand that the number of main circuits in the DC-DC converter is not limited to two, but may be more or less.

As shown in Fig. 4, the auxiliary power supply generating means (Auxiliary Power Supply, APS) 201 may comprise a half-wave rectification circuit, and the reference ground of the auxiliary power supply is the positive terminal of the first power supply (14 V).

According to an embodiment of this disclosure, the half-wave rectification circuit may comprise a floating winding, a first diode D1 and a capacitor C3.

A first terminal of the floating winding is connected with the first power supply (14 V), and a second terminal of the floating winding is connected with an anode of the first diode D1. A cathode of the first diode D1 is connected with the voltage supplying means 202. The capacitor C3 is connected between the first terminal of the floating winding and the cathode of the first diode D1.

The auxiliary power supply generating means 201 can generate a false voltage signal of 12 V/P14 V based on the first power supply (14 V); the voltage of the false voltage signal relative to ground may be 12 V + 14 V = 26 V.

The auxiliary power supply generating means 201 may be a secondary side of a flyback converter, and a primary side of the flyback converter is connected to the first power supply (14 V). The auxiliary power supply generating means 201 draws power from the primary side of the flyback converter, in order to provide an auxiliary power supply. In other words, the primary side of the flyback converter draws power from the first power supply 14 V, in order to supply energy to the auxiliary power supply generating means 201, in order to transfer the auxiliary power supply.

As shown in Fig. 4, the voltage supplying means 202 may comprise a second diode D2 and a third diode D3.

An anode of the second diode D2 is connected with a port dedicated to the second power supply (48 V), and a cathode of the second diode is connected with the output means 203. An anode of the third diode D3 is connected with the auxiliary power supply generating means 201, and a cathode of the third diode is connected with the output means 203.

In one example, the cathodes of the second diode D2 and the third diode D3 are connected with each other. Thus, in Fig. 4, D2 and D3 are shown as being connected in parallel to a VIN port of LM5170, to supply the auxiliary power supply 12 V/P14 V or the second power supply 48 V to LM5170.

In one example, a switch S1 is connected between the second power supply and the port dedicated to the second power supply (48 V). The voltage supplying means 202 outputs the auxiliary power supply 12 V/P14 V through the third diode D3 when the switch S1 is turned off, and outputs the second power supply 48 V through the second diode D2 when the switch S1 is turned on.

In addition, the third diode D3 can prevent a short circuit from occurring between the 48 V port and the 14 V port when the first diode D1 and capacitor C3 have a short circuit, and the second diode D2 can prevent a short circuit from occurring in the 14 V battery system when C2 has a short circuit.

The output means 203 may simply be specificized as conductive wires connected to D2 and D3 respectively.

In this way, before the switch S1 has been turned on, the apparatus 200 may supply the first power supply 14 V and the auxiliary power supply 12 V/P14 V to the control circuit; thus the control circuit can receive a differential voltage having a 12 V voltage difference. After the switch S1 has been turned on, the apparatus 200 can supply the first power supply 14 V and the second power supply 48 V to the control circuit; thus the control circuit can receive a differential voltage having a 34 V voltage difference.

Thus, the apparatus 200 may be configured to use an output differential voltage to supply a differential voltage to a control circuit such as LM5170, in order to control the DC-DC converter.

Specifically, with regard to control circuit LM5170, to ensure a circuit breaker function of a security device, it must receive a differential voltage having a voltage difference greater than 10 V, and the apparatus 200 according to an embodiment of this disclosure can at least supply a differential voltage having a 12 V voltage difference.

Thus, when the apparatus 200 according to an embodiment of this disclosure is used, LM5170 can operate normally even when the switch S1 is open.

Although the main circuits of the DC-DC converter shown in Fig. 4 only comprise the two main circuits unit 1 and unit 2, it can be understood that control circuit LM5170 may also drive 4 circuits, etc.

In addition, by adjusting the size of components in the apparatus 200, in particular the auxiliary power supply generating means 201, it can be ensured that the voltage difference between the first power supply 14 V and the power supply output by the voltage supplying means 202 is greater than or equal to 10 V.

In addition, since discrete analogue devices are used to realize the apparatus 200, the structure is simple and the cost is low.

The control circuit is connected to a security device of the DC-DC converter. As shown in Fig. 4, the security device comprises two common-source security metal oxide semiconductor field effect transistors (MOSFETs). The two security MOSFETs may be N type MOSFETs.

The pre-charging process of C2 is split into two stages. In the first stage, C1 and C2 are charged from 0V to 14 V; and in the second stage, C2 is further charged to 48 V. The two common-source security MOSFETs only act in the first stage; in the second stage, the two common-source security MOSFETs are both turned on, and serve the function of conducting wires.

According to an embodiment of this disclosure, referring to Fig. 4, a DC-DC converter configured to convert a voltage between a first power supply (e.g. 14 V) and a second power supply (e.g. 48 V) is also provided, comprising a first port, a second port, a first capacitor (C1), a second capacitor (C2) and a security device.

The first port, e.g. a port for the first power supply, is configured to be connected to the first power supply (14 V). The second port, e.g. a port for the second power supply, is configured to be connected to the second power supply (48 V). A converting means is connected between the first and second ports. Here, the converting means is the main circuits of the DC-DC converter, e.g. unit 1 and unit 2. The first capacitor (C1) is connected between the first port and ground, said ground being configured to be connected to a negative pin of the first power supply and a negative pin of the second power supply. The second capacitor (C2) is connected between the second port and ground. The security device is connected to the first port and configured to be connected to the first power supply, and is connected to the apparatus 200 described above. The security device is e.g. two common-source security MOSFETs as shown in Fig. 4.

The DC-DC converter is controlled by the differential voltage output by the apparatus 200.

In addition, an embodiment of this disclosure also provides a hybrid vehicle comprising the DC-DC converter described above.

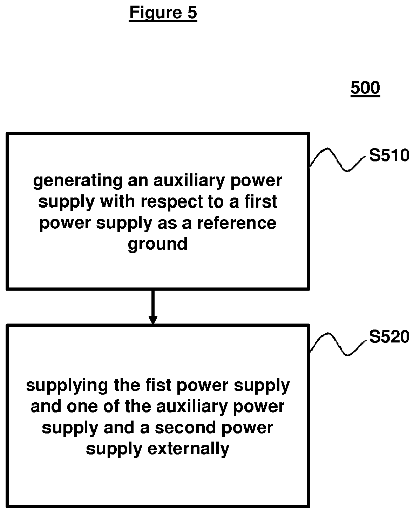

Fig. 5 shows a schematic flow chart of a method 500 for supplying a differential voltage according to an embodiment of this disclosure.

As shown in Fig. 5, in S510 of the method 500, an auxiliary power supply is generated with respect to a first power supply as a reference ground. In S520, the first power supply and one of the auxiliary power supply and a second power supply are supplied externally.

Thus, according to an embodiment of this disclosure, there is a voltage difference between the first power supply and the power supply supplied, so a differential voltage can be supplied, and so another circuit can use this differential voltage to operate normally.

In one example, the step of supplying the first power supply and one of the auxiliary power supply and a second power supply externally comprises: supplying the first power supply and the auxiliary power supply externally before the second power supply is turned on; and supplying the first power supply and the second power supply externally after the second power supply is turned on.

In one example, the step of supplying the first power supply and one of the auxiliary power supply and a second power supply externally comprises supplying a differential voltage to a control circuit using the output differential voltage so as to control a DC-DC converter.

In one example, a voltage difference between the first power supply and one of the auxiliary power supply and a second power supply is greater than or equal to 10 V.

It should be noted that for clarity and simplicity, only parts relevant to embodiments of the present invention are shown in Figs. 2 to 4. However, those skilled in the art should understand that the apparatuses or devices shown in Figs. 2 to 4 may comprise other necessary units.

The embodiments above are merely particular embodiments of the present invention, but the scope of protection of the present invention is only limited by the appended claims.

## Claims

1. A system comprising: a control circuit (control circuit, LM5170); a DC-DC converter configured to convert a voltage between a first power supply (14V) and a second power supply (48V), comprising: a first port configured to be connected to the first power supply (14V); a second port configured to be connected to the second power supply (48V); converting means (Unit 1, Unit 2) connected between the first and second ports; a first capacitor (C1) connected between the first port and ground, said ground being configured to be connected to a negative pin of the first power supply (14V) and a negative pin of the second power supply (48V); a second capacitor (C2) connected between the second port and ground; and a security device (Security MOSFET) connected to the control circuit (control circuit, LM5170) and the first port and configured to be connected to the first power supply (14V);
**characterized in that** the system further comprises: an apparatus (200) connected to the security device (Security MOSFET) and the control circuit (control circuit, LM5170) and configured to supply a differential voltage, said apparatus comprising: an auxiliary power supply generating means (201), which is configured to be connected to the first power supply (14V), and configured to generate an auxiliary power supply (12V/P14V); a voltage supplying means (202) configured to receive the second power supply (48V) and the auxiliary power supply (12V/P14V), and output one of the auxiliary power supply (12V/P14V) and the second power supply (48V); and an output means (203) configured to supply the output from the voltage supplying means (202) and the first power supply (14V) as the differential voltage to the control circuit (control circuit, LM5170) to control the DC-DC converter, in order
to ensure a circuit-breaker function (circuit breaker, BRKS, BRKG) of the security device (Security MOSFET), and to provide for a pre-charge of the first capacitor (C1), and the second capacitor (C2).

2. The system of claim 1, wherein the auxiliary power supply generating means comprises a half-wave rectification circuit, and a reference ground of the auxiliary power supply is a positive terminal of the first power supply.

3. The system of claim 2, wherein the half-wave rectification circuit comprises:
a floating winding, a first terminal of the floating winding is connected with the first power supply and a second terminal thereof is connected with an anode of a first diode;
the first diode, a cathode of the first diode is connected with the voltage supplying means; and
a capacitor connected between the first terminal of the floating winding and the cathode of the first diode.

4. The system of claim 2 or 3, wherein the auxiliary power supply generating means is a secondary side of a flyback converter, and a primary side of the flyback converter is connected to the first power supply.

5. The system of any one of claims 1-4, wherein the voltage supplying means comprises:
a second diode, an anode of the second diode is connected with a port dedicated to the second power supply, and a cathode thereof is connected with the output means; and
a third diode, an anode of the third diode is connected with the auxiliary power supply generating means, and a cathode thereof is connected with the output means.

6. The system of claim 5, wherein the cathodes of the second diode and the third diode are connected with each other, and a switch is connected between the port dedicated to the second power supply and the second power supply.

7. The system of claim 6, wherein the voltage supplying means outputs the auxiliary power supply through the third diode when the switch is turned off, and outputs the second power supply through the second diode when the switch is turned on.

8. The system of any one of claims 1-7, wherein a voltage difference between the power supply output from the voltage supplying means and the first power supply is greater than or equal to 10V.

9. A hybrid vehicle comprising the system of any one of claims 1-8.

10. A method for operating the system of claim 1, comprising: supplying the differential voltage by the apparatus (200), wherein supplying the differential voltage comprises: connecting the first power supply (14V) to the auxiliary power supply generating means (201) and generate (S510) an auxiliary power supply; and receiving the auxiliary power supply (12V/P14V) and the second power supply (48V), and output one of the auxiliary power supply (12V/P14V) and the second power supply (48V) by the voltage supplying means (202); and supplying (S520) by the output means (203) the output from the voltage supplying means (202) and the first power supply (14V) as the differential voltage to the control circuit (control circuit, LM5170) and control the DC-DC converter, in order to ensure a circuit-breaker function (circuit breaker, BRKS, BRKG) of the security device (Security MOSFET), and to provide for a pre-charge of the first capacitor (C1) and the second capacitor (C2).

11. The method for operating the system of claim 10, wherein the supplying the first power supply and one of the auxiliary power supply and a second power supply externally comprises:
supplying the first power supply and the auxiliary power supply externally before the second power supply is turned on; and
supplying the first power supply and the second power supply externally after the second power supply is turned on.

12. The method for operating the system of claim 10 or 11, wherein a voltage difference between the first power supply and one of the auxiliary power supply and a second power supply is greater than or equal to 10V.

## Patentansprüche

1. System, umfassend: eine Steuerschaltung (Steuerschaltung, LM5170); einen Gleichspannungswandler, der dafür ausgelegt ist, eine Spannung zwischen einer ersten Spannungsversorgung (14V) und einer zweiten Spannungsversorgung (48V) umzuwandeln, umfassend: einen ersten Port, der dafür ausgelegt ist, mit der ersten Spannungsversorgung (14V) verbunden zu werden; einen zweiten Port, der dafür ausgelegt ist, mit der zweiten Spannungsversorgung (48V) verbunden zu werden; ein Wandlermittel (Einheit 1, Einheit 2), das zwischen dem ersten und dem zweiten Port geschaltet ist; ein erster Kondensator (C1), der zwischen dem ersten Port und Masse geschaltet ist, wobei die Masse dafür ausgelegt ist, mit einem Minuspol der ersten Spannungsversorgung (14V) und einem Minuspol der zweiten Spannungsversorgung (48V) verbunden zu werden; einen zweiten Kondensator (C2), der zwischen dem zweiten Port und Masse geschaltet ist; und eine Sicherheitsvorrichtung (Sicherheits-MOSFET), die mit der Steuerschaltung (Steuerschaltung, LM5170) und dem ersten Port verbunden ist und dafür ausgelegt ist, mit der ersten Spannungsversorgung (14V) verbunden zu werden; **dadurch gekennzeichnet, dass** das System ferner umfasst:
eine Einrichtung (200), die mit der Sicherheitsvorrichtung (Sicherheits-MOSFET) und der Steuerschaltung (Steuerschaltung, LM5170) verbunden und
dafür ausgelegt ist, eine Differenzspannung bereitzustellen, wobei die Einrichtung umfasst: ein Hilfsspannungsversorgung-Generierungsmittel (201), das dafür ausgelegt ist, mit der ersten Spannungsversorgung (14V) verbunden zu werden, und das dafür ausgelegt ist,
eine Hilfsspannungsversorgung (12V/P14V); ein Spannungsbereitstellungsmittel (202), das dafür ausgelegt ist, die zweite Spannungsversorgung (48V) und die Hilfsspannungsversorgung (12V/ P14V) zu empfangen und eines von der Hilfsspannungsversorgung (12V/ P14V) und der zweiten Spannungsversorgung (48V) auszugeben; und ein Ausgabemittel (203), das dafür ausgelegt ist, die Ausgabe von dem Spannungsbereitstellungsmittel (202) und der ersten Spannungsversorgung (14V) als Differenzspannung für die Steuerschaltung (Steuerschaltung, LM5170) bereitzustellen, um den Gleichspannungswandler so zu steuern, dass eine Leistungsschalterfunktion (Leistungsschalter, BRKS, BRKG) der Sicherheitsvorrichtung (Sicherheits-MOSFET) sichergestellt ist und um für eine Vorladung des ersten Kondensators (Cl) und des zweiten Kondensators (C2) zu sorgen.

2. System nach Anspruch 1, wobei
das Hilfsspannungsversorgung-Generierungsmittel eine Halbwellengleichrichtungsschaltung umfasst und eine Bezugsmasse der Hilfsspannungsversorgung ein Pluspol der ersten Spannungsversorgung ist.

3. System nach Anspruch 2, wobei die Halbwellengleichrichtungsschaltung umfasst:
eine potenzialfreie Wicklung, wobei der erste Anschluss der potenzialfreien Wicklung mit der ersten Spannungsversorgung verbunden ist und ein zweiter Anschluss davon mit einer Anode einer ersten Diode verbunden ist;
die erste Diode, wobei eine Kathode der ersten Diode mit dem Spannungsbereitstellungsmittel verbunden ist; und
einen Kondensator, der zwischen dem ersten Anschluss der potenzialfreien Wicklung und der Kathode der ersten Diode geschaltet ist.

4. System nach Anspruch 2 oder 3, wobei das Hilfsspannungsversorgung-Generierungsmittel eine Sekundärseite eines Sperrwandlers ist und eine Primärseite des Sperrwandlers mit der ersten Spannungsversorgung verbunden ist.

5. System nach einem der Ansprüche 1-4,
wobei das Spannungsbereitstellungsmittel umfasst:
eine zweite Diode, wobei eine Anode der zweiten Diode mit einem Port verbunden ist, der speziell für die zweite Spannungsversorgung vorgesehen ist, und eine Kathode davon mit dem Ausgabemittel verbunden ist; und
eine dritte Diode, wobei eine Anode der dritten Diode mit dem Hilfsspannungsversorgung-Generierungsmittel verbunden ist und eine Kathode davon mit dem Ausgabemittel verbunden ist.

6. System nach Anspruch 5,
wobei die Kathoden der zweiten Diode und der dritten Diode miteinander verbunden sind und ein Schalter zwischen dem Port, der speziell für die zweite Spannungsversorgung vorgesehen ist, und der zweiten Spannungsversorgung geschaltet ist.

7. System nach Anspruch 6,
wobei das Spannungsbereitstellungsmittel die Hilfsspannungsversorgung durch die dritte Diode ausgibt, wenn der Schalter ausgeschaltet ist, und die zweite Spannungsversorgung durch die zweite Diode ausgibt, wenn der Schalter eingeschaltet ist.

8. System nach einem der Ansprüche 1-7,
wobei eine Spannungsdifferenz zwischen der Spannungsversorgungsausgabe von dem Spannungsbereitstellungsmittel und der ersten Spannungsversorgung größer oder gleich 10 V ist.

9. Hybridfahrzeug, umfassend das System nach einem der Ansprüche 1-8.

10. Verfahren zum Betreiben des System nach Anspruch 1, umfassend: Bereitstellen der Differenzspannung durch die Einrichtung (200), wobei das Bereitstellen der Differenzspannung umfasst: Verbinden der ersten Spannungsversorgung (14V) mit dem Hilfsspannungsversorgung-Generierungsmittel (201) und Generieren (S510) einer Hilfsspannungsversorgung in Bezug auf die erste Spannungsversorgung (14V) als Bezugsmasse; und Empfangen der Hilfsspannungsversorgung (12V/P14V) und der zweiten Spannungsversorgung (48V) und Ausgeben von einem von der Hilfsspannungsversorgung (12V/P14V) und der zweiten Spannungsversorgung (48V) durch das Spannungsbereitstellungsmittel (202); und Bereitstellen (S520), durch das Ausgabemittel (203), der Ausgabe von dem Spannungsbereitstellungsmittel (202) und der ersten Spannungsversorgung (14V) als Differenzspannung für die Steuerschaltung (Steuerschaltung, LM5170) und Steuern des Gleichspannungswandlers, um eine Leistungsschalterfunktion (Leistungsschalter, BRKS, BRKG) der Sicherheitsvorrichtung (Sicherheits-MOSFET) sicherzustellen, und um für eine Vorladung des ersten Kondensators (C1) und des zweiten Kondensators (C2) zu sorgen.

11. Verfahren zum Betreiben eines System nach Anspruch 10, wobei das Bereitstellen der ersten Spannungsversorgung und eines von der Hilfsspannungsversorgung und einer zweiten Spannungsversorgung extern umfasst:
Externes Bereitstellen der ersten Spannungsversorgung und der Hilfsspannungsversorgung, bevor die zweite Spannungsversorgung eingeschaltet wird; und
externes Bereitstellen der ersten Spannungsversorgung und der zweiten Spannungsversorgung, nachdem die zweite Spannungsversorgung eingeschaltet worden ist.

12. Verfahren zum Betreiben eines System nach Anspruch 10 oder 11, wobei eine Spannungsdifferenz zwischen der ersten Spannungsversorgung und einem von der Hilfsspannungsversorgung und einer zweiten Spannungsversorgung größer oder gleich 10 V ist.

## Revendications

1. Système comprenant : un circuit de commande (circuit de commande, LM5170) ; un convertisseur DC-DC conçu pour convertir une tension entre une première alimentation (14V) et une deuxième alimentation (48V), comprenant :
un premier port conçu pour être connecté à la première alimentation (14V) ; un deuxième port conçu pour être connecté à la deuxième alimentation (48V) ; des moyens de conversion (unité 1, unité 2) connectés entre les premier et deuxième ports ; un premier condensateur (C1) connecté entre le premier port et la masse, ladite masse étant conçue pour être connectée à une broche négative de la première alimentation (14V) et à une broche négative de la deuxième alimentation (48V) ; un deuxième condensateur (C2) connecté entre le deuxième port et la masse ; et un dispositif de sécurité (MOSFET de sécurité) connecté au circuit de commande (circuit de commande, LM5170) et au premier port et conçu pour être connecté à la première alimentation électrique (14V) ;
**caractérisé en ce que** le système comprend en outre : un appareil (200) connecté au dispositif de sécurité (MOSFET de sécurité) et au circuit de commande (circuit de commande, LM5170) et conçu pour fournir une tension différentielle, ledit appareil comprenant : un moyen de génération d'alimentation électrique auxiliaire (201) qui est conçu pour être connecté à la première alimentation électrique (14V) et qui est conçu pour générer une alimentation électrique auxiliaire (12V/P14V) ; un moyen d'alimentation en tension (202) conçu pour recevoir la deuxième alimentation (48V) et l'alimentation auxiliaire (12V/P14V), et pour délivrer l'une parmi l'alimentation auxiliaire (12V/P14V) et la deuxième alimentation (48V) ; et un moyen de sortie (203) conçu pour fournir la sortie du moyen d'alimentation en tension (202) et la première alimentation (14V) sous forme de tension différentielle au circuit de commande (circuit de commande, LM5170) pour commander le convertisseur DC-DC afin d'assurer une fonction de disjoncteur (disjoncteur, BRKS, BRKG) du dispositif de sécurité (MOSFET de sécurité), et de fournir une pré-charge du premier condensateur (Cl), et du deuxième condensateur (C2).

2. Système selon la revendication 1, le moyen de génération d'alimentation auxiliaire comprenant un circuit de redressement demi-onde, et une masse de référence de l'alimentation auxiliaire étant une borne positive de la première alimentation.

3. Système selon la revendication 2, le circuit de redressement demi-onde comprenant :
un enroulement flottant, une première borne de l'enroulement flottant étant connectée à la première alimentation et une deuxième borne de celle-ci étant connectée à une anode d'une première diode ;
la première diode, une cathode de la première diode étant connectée au moyen d'alimentation en tension ; et
un condensateur connectée entre la première borne de l'enroulement flottant et la cathode de la première diode.

4. Système selon la revendication 2 ou 3, le moyen de génération d'alimentation auxiliaire étant un côté secondaire d'un convertisseur flyback, et un côté primaire du convertisseur flyback étant connecté à la première alimentation.

5. Système selon l'une quelconque des revendications 1 à 4,
le moyen d'alimentation en tension comprenant :
une deuxième diode, une anode de la deuxième diode étant connectée à un port dédié à la deuxième alimentation, et une cathode de celle-ci étant connectée aux moyens de sortie ; et
une troisième diode, une anode de la troisième diode étant connectée au moyen de génération d'alimentation auxiliaire, et une cathode de celle-ci étant connectée au moyen de sortie.

6. Système selon la revendication 5, les cathodes de la deuxième diode et de la troisième diode étant connectées entre elles, et un commutateur étant connecté entre le port dédié à la deuxième alimentation et la deuxième alimentation.

7. Système selon la revendication 6, le moyen d'alimentation en tension délivrant l'alimentation auxiliaire par le biais de la troisième diode lorsque le commutateur est désactivé, et délivrant la deuxième alimentation par le biais de la deuxième diode lorsque le commutateur est activé.

8. Système selon l'une quelconque des revendications 1 à 7, une différence de tension entre l'alimentation en sortie du moyen d'alimentation en tension et la première alimentation étant supérieure ou égale à 10 V.

9. Véhicule hybride comprenant le système selon l'une quelconque des revendications 1 à 8.

10. Procédé de fonctionnement du système selon la revendication 1, le procédé comprenant les étapes suivantes : fournir la tension différentielle par le biais de l'appareil (200), la fourniture de la tension différentielle comprenant la liaison de la première alimentation (14V) au moyen de génération d'alimentation auxiliaire (201) et la génération (S510) d'une alimentation électrique auxiliaire par rapport à la première alimentation (14V) en tant que masse de référence ; et recevoir l'alimentation auxiliaire (12V/P14V) et la deuxième alimentation (48V), et délivrer l'une parmi l'alimentation auxiliaire (12V/P14V) et la deuxième alimentation (48V) par le biais du moyen d'alimentation en tension (202) ; et fournir (S520) par le moyen de sortie (203) la sortie du moyen d'alimentation en tension (202) et la première alimentation (14V) en tant que tension différentielle au circuit de commande (circuit de commande, LM5170) et commander le convertisseur DC-DC afin d'assurer une fonction de disjoncteur (disjoncteur, BRKS, BRKG) du dispositif de sécurité (MOSFET de sécurité), et prévoir une pré-charge du premier condensateur (C1) et du deuxième condensateur (C2).

11. Procédé de fonctionnement du système selon la revendication 10, la fourniture de la première alimentation et l'une parmi l'alimentation auxiliaire et une deuxième alimentation en externe comprenant :
la fourniture de la première alimentation et l'alimentation auxiliaire en externe avant que la deuxième alimentation ne soit activée ; et
la fourniture de la première alimentation et la deuxième alimentation en externe après la mise sous tension de la deuxième alimentation.

12. Procédé de fonctionnement du système selon la revendication 10 ou 11, une différence de tension entre la première alimentation et l'une parmi l'alimentation auxiliaire et une deuxième alimentation étant supérieure ou égale à 10 V.
